# EUROPÄISCHE PATENTSCHRIFT

(11) **EP 2 250 211 B1**
(45) Veröffentlichungstag und Bekanntmachung des Hinweises auf die Patenterteilung: **04.07.2012**
(21) Anmeldenummer: 09715432.2
(22) Anmeldetag: 17.02.2009
(51) Int. Cl.: C08G 65/00, C08G 65/30

(54) **VERFAHREN ZUR HERSTELLUNG VON POLYOLEN**
METHOD FOR THE PRODUCTION OF POLYOLS
PROCÉDÉ DE FABRICATION DE POLYOLS

(30) Priorität: 28.02.2008 DE 102008011683
(43) Veröffentlichungstag der Anmeldung: 17.11.2010
(73) Patentinhaber: Bayer MaterialScience AG, 51368 Leverkusen (DE)
(72) Erfinder: LORENZ, Klaus, 41539 Dormagen (DE)
(86) Internationale Anmeldenummer: PCT/EP2009/001084
(87) Internationale Veröffentlichungsnummer: WO 2009/106244

(56) Entgegenhaltungen:
- EP-A- 0 050 181
- EP-A- 0 102 508
- US-A1- 2004 167 316

## Beschreibung

Gegensand der Erfindung ist die Verwendung vor Polyolen zur Herstellung von Polyurethanen.Die Polyole sind erhältlich über ein aufarbeitungsfreies Verfahren ,wobei die Polyole lösliche Salze einbasischer anorganischer Säuren enthalten Unter Polyolen sind im Folgenden, soweit nicht explizit spezifiziert, sowohl Polyetherpolyole als auch Polyetheresterpolyole zu verstehen.

Zur Herstellung von Polyurethanwerkstoffen wie Weich- oder Hartschaumstoffen bzw. massiven Werkstoffen wie Elastomeren geeignete Polyole werden im Allgemeinen durch Polymerisation geeigneter Alkylenoxide auf polyfunktionelle, d. h. mehrere Zerewitinoff-aktive Wasserstoffatome enthaltende Starterverbindungen erhalten. Für die Durchführung dieser Polymerisationsreaktionen sind seit langem die verschiedensten Verfahren bekannt, die sich zum Teil komplementär ergänzen:
Von großtechnischer Bedeutung ist zum einen die basisch katalysierte Anlagerung von Alkylenoxiden an Starterverbindungen mit Zerewitinoff-aktiven Wasserstoffatomen, zum anderen die gewinnt die Verwendung von Doppelmetallcyanidverbindungen ("DMC-Katalysatoren") für die Durchführung dieser Reaktion zunehmend an Bedeutung. Mit dem Einsatz hochaktiver DMC-Katalysatoren, die z.B. in US-A 5 470 813, EP-A 700 949, EP-A 743 093, EP-A 761 708, WO 97/40086, WO 98/16310 und WO 00/47649 beschrieben sind, ist die Polyetherpolyolherstellung bei sehr geringen Katalysatorkonzentrationen (25 ppm oder weniger) möglich, so dass eine Abtrennung des Katalysators aus dem fertigen Produkt nicht mehr erforderlich ist. Diese Katalysatoren sind jedoch für die Herstellung von kurzkettigen Polyolen oder von Polyolen mit hohen Ethylenoxidgehalten nicht geeignet. Auch können Polyether-auf Basis aminogruppenhaltiger Starter nicht über DMC-Katalyse erhalten werden. Die seit langem bekannten basischen Katalysatoren, z. B. auf Basis von Alkalimetallhydroxiden, erlauben hingegen die problemlose Herstellung kurzkettiger und/oder hoch ethylenoxidhaltiger und auch aminogruppenhaltiger Polyole, der Katalysator muss aber in aller Regel aus dem alkalischen Rohpolymerisat mittels eines separaten Aufarbeitungsschritts entfernt werden. Die durch (Lewis-)Säuren katalysierte Anlagerung von Alkylenoxiden an geeignete Starterverbindungen ist aufgrund von Nebenproduktbildung von untergeordneter Bedeutung.

Die basisch katalysierte Anlagerung von Alkylenoxiden wie beispielsweise Ethylenoxid oder Propylenoxid an Starterverbindungen mit Zerewitinoff-aktiven Wasserstoffatomen erfolgt, wie bereits erwähnt, in Gegenwart von Alkalimetallhydroxiden, es können aber auch Alkalimetallhydride, Alkalimetallcarboxylate, Erdakalihydroxide oder Amine wie N,N-Dimethylbenzylamin oder Imidazol- bzw. Imidazolderivate eingesetzt werden. Nach erfolgter Anlagerung der Alkylenoxide müssen die polymerisationsaktiven Zentren an den Polyetherketten deaktiviert werden. Hierfür sind verschiedene Vorgehensweisen möglich. Beispielsweise kann mit verdünnten Mineralsäuren wie Schwefelsäure oder Phosphorsäure neutralisiert werden. Die Stärke der zweiten Dissoziationsstufe der Schwefelsäure reicht zur Protonierung der durch Hydrolyse der aktiven Alkoholatgruppen entstehenden Alkalimetallhydroxide aus, so dass pro mol eingesetzter Schwefelsäure 2 mol Alkoholatgruppen neutralisiert werden können. Phosphorsäure hingegen muss äquimolar zur Menge der zu neutralisierenden Alkoholatgruppen eingesetzt werden. Die bei der Neutralisation und/oder während der Abdestillation des Wassers entstehenden Salze müssen mittels Filtrationsverfahren abgetrennt werden. Destillations- und Filtrationsprozesse sind zeit- und energieintensiv und zudem in manchen Fällen, z. B. bei Polyolen mit C-2-Bausteinen (Ethylenoxidanteilen) in der Kette, nicht gut reproduzierbar. Es sind daher viele Verfahren entwickelt worden, die ohne Filtrationsschritt und in vielen Fällen auch ohne Destillationsschritt auskommen: Die Neutralisation mit Hydroxycarbonsäuren wie Milchsäure wird in WO 98/20061 und US-A 2004167316 für die Aufarbeitung kurzkettiger Polyole für Hartschaumanwendungen beschrieben, es handelt sich hierbei um weitverbreitete und gut etablierte Verfahren. In US-A 4521548 wird beschrieben, wie die polymerisationsaktiven Zentren in ähnlicher Weise durch Umsetzung mit Ameisensäure deaktiviert werden können. Die nach Neutralisation mit Hydroxycarbonsäuren bzw. Ameisensäure entstehenden Metallcarboxylate sind in den Polyetherpolyolen klar löslich. Nachteilig bei diesen Verfahren ist jedoch die für viele Polyurethananwendungen unerwünschte katalytische Aktivität der in den Produkten verbleibenden verhältnismäßig basischen Carbonsäuresalze. In JP-A 10-30023 und US-A 4110268 werden zur Neutralisation daher aromatische Sulfonsäuren bzw. organische Sulfonsäuren eingesetzt, die ebenfalls in den Polyetherpolyolen lösliche Salze bilden, welche aber weniger basisch sind und sich durch geringere katalytische Aktivität auszeichnen. Ein entscheidender Nachteil sind hier die mit dem Einsatz der Sulfonsäuren verbundenen hohen Kosten. Die Aufarbeitung mittels saurer Kationenaustauscher, wie sie in DE-A 100 24 313 beschrieben ist, erfordert den Einsatz von Lösungsmitteln und deren destillative Abtrennung und ist somit ebenfalls mit hohen Kosten verbunden. Phasentrennverfahren erfordern lediglich einen Hydrolyse-, jedoch keinen Neutralisationsschritt und sind beispielsweise beschrieben in WO 01/14456, JP-A 6-157743, WO 96/20972 und US-A 3823145. Mit dem Einsatz von Koalescern oder Zentrifugen wird die Phasentrennung der Polyetherpolyole von der alkalischen wässrigen Phase unterstützt, oft müssen auch hier Lösungsmittel zugesetzt werden, um den Dichteunterschied zwischen der Polyetherphase und der Wasserphase zu erhöhen. Solche Verfahren sind nicht für alle Polyetherpolyole geeignet, insbesondere versagen sie bei kurzkettigen Polyetherpolyolen oder bei Polyolen mit hohen Ethylenoxidanteilen. Die Aufarbeitung von Polyetheresterpolyolen kann ebenfalls nicht nach derartigen Phasentrennprozessen betrieben werden, da der lange Kontakt der Polyetheresterketten mit der alkalischen wässrigen Phase unweigerlich zu irreversibler Hydrolyse der Esterbindungen fuhren würde. Der Einsatz von Lösungsmitteln ist kostenintensiv und Zentrifugen erfordern einen hohen Instandhaltungsaufwand.

Bei aminisch katalysierten Alkylenoxidadditionsreaktionen kann auf eine weitere Aufarbeitung verzichtet werden, sofern die Anwesenheit der Amine in diesen Polyolen die Herstellung von Polyurethanwerkstoffen nicht beeinträchtigt. Über aminische Katalyse können nur Polyole mit verhältnismäßig niedrigen Äquivalentgewichten erhalten werden, siehe hierzu beispielsweise Ionescu et al. in "Advances in Urethane Science & Technology", 1998, 14, S. 151-218.

Im Folgender wird ein preiswertes Aufarbeitungsverfahren für unter Alkali- oder Erdalkalihydroxid, -carboxylat oder -hydridkatalyse hergestellte ethylenoxidhaltige Polyole beschrieben, welches die genannten Nachteile der Verfahren des Standes der Technik nicht aufweist.

Die Neutralisation der alkalischen, polymerisationsaktiven Zentren des rohen Alkylenoxidadditionsprodukes erfolgt durch Zugabe einer oder mehrerer einbasischer anorganischer Säuren. Das bei der Polyolherstellung dosierte Alkylenoxidgemisch enthält mindestens 10 Gew.-% Ethylenoxid, bevorzugt mindestens 20 Gew.-% Ethylenoxid und besonders bevorzugt mehr als 50 Gew.-% Ethylenoxid. Man erhält nach dieser Vorgehensweise überraschenderweise ohne weitere Aufarbeitungsschritte völlig klare Produkte mit geringem Basengehalt. Werden anstelle der einbasischen anorganischen Säuren die zur Neutralisation des Katalysators ausreichenden Mengen Phosphorsäure (1 mol / mol Base) oder Schwefelsäure (0,5 mol / mol Base) eingesetzt, so resultieren trübe Produkte mit hohem Alkaligehalt. Die Methode ist auf lang-und kurzkettige Polyetherpolyole anwendbar, d. h. der OH-Zahl-Bereich der Endprodukte erstreckt sich von etwa 20 mg KOH/g bis etwa 900 mg KOH/g. Die Struktur der Polyetherketten, d. h. die Zusammensetzung des eingesetzten Alkylenoxidgemisches, kann beim Polyolherstellprozess ebenfalls variiert werden.

Im Einzelnen wird das Verfahren wie folgt durchgerührt:
Die Starterverbindungen mit Zerewitinoff-aktiven Wasserstoffatomen werden üblicherweise im Reaktor vorgelegt und mit dem Katalysator, also dem Alkalimetallhydroxid, Alkali-, Erdawalirnetallhydrid, Alkali-, Erdalkalimetallcarboxylat oder Erdakalimetallhydroxid, versetzt. Bevorzugt werden Alkalimetallhydroxide eingesetzt, besonders bevorzugt ist Kaliumhydroxid. Der Katalysator kann der Starterverbindung als wässrige Lösung oder als Feststoff zugeführt werden. Die auf die Endproduktmenge bezogene Katalysatorkonzentration beträgt 0,004 bis 0,2 Gew.-%, bevorzugt 0,004 bis 0,07 Gew.-%. Das Lösungswasser und / oder das bei der Reaktion der Zerewitinoff-aktiven Wasserstoffatome mit dem Katalysator freigesetzte Wasser kann vor Beginn der Dosierung des oder der Alkylenoxide(s) im Vakuum bei erhöhter Temperatur, bevorzugt bei Reaktionstemperatur, entfernt werden.

Als basische Katalysatoren können auch vorgefertigte Alkylenoxid-Additionsprodukte von Zerewitinoff-aktive Wasserstoffatome enthaltenden Starterverbindungen mit Alkoxylatgehalten von 0,05 bis 50 Äquivalenz-% eingesetzt werden ("polymere Alkoxylate"). Unter dem Alkoxylatgehalt des Katalysators ist der durch eine Base durch Deprotonierung entfernte Anteil zerewitinoff-aktiver Wasserstoffatome an allen ursprünglich im AlkylenoxidAdditionsprodukt des Katalysators vorhanden gewesenen zerewitinoff-aktiven Wasserstoffatomen zu verstehen. Die Einsatzmenge des polymeren Alkoxylates richtet sich natürlich nach der für die Endproduktmenge angestrebten Katalysatorkonzentration, wie im vorangehenden Abschnitt beschrieben.

Die im Reaktor vorgelegten Starterverbindungen werden nun unter Inertgasatmosphäre bei Temperaturen von 80 - 180°C, bevorzugt bei 100 - 170°C mit Alkylenoxiden zur Reaktion gebracht, wobei die Alkylenoxide in der gängigen Weise dem Reaktor kontinuierlich derart zugeführt werden, dass die sicherheitstechnischen Druckgrenzen des verwendeten Reaktorsystems nicht überschritten werden. Üblicherweise werden solche Reaktionen im Druckbereich von 10 mbar bis 10 bar durchgeführt. Nach Ende der Alkylenoxiddosierphase schließt sich normalerweise eine Nachreaktionsphase an, in der restliches Alkylenoxid abreagiert. Das Ende dieser Nachreaktionsphase ist erreicht, wenn kein weiterer Druckabfall im Reaktionskessel feststellbar ist. Das alkalische Alkylenoxidadditionsprodukt kann nun durch Wasser zunächst hydrolysiert werden. Dieser Hydrolyseschritt ist jedoch für die Durchführung des erfindungsgemäßen Verfahrens nicht essentiell. Die Wassermenge beträgt hierbei bis zu 15 Gew.-%, bezogen auf die Menge des alkalischen Alkylenoxidadditionsproduktes. Die Neutralisation der alkalischen, polymerisationsaktiven Zentren des rohen, gegebenenfalls hydrolysierten Alkylenoxidadditionsproduktes erfolgt sodann durch Zugabe einer oder mehrerer einbasischer anorganischer Säuren. Die Temperatur bei Hydrolyse und Neutralisation kann in weiten Bereichen variiert werden, Grenzen können hierbei durch die Korrosionsbeständigkeit der Materialien der Neutralisationskessel oder die Polyolzusammensetzung gegeben sein. Sind hydrolyseempfindliche Gruppen, wie beispielsweise Estergruppen, in den Produkten zugegen, kann beispielsweise bei Raumtemperatur neutralisiert werden. In solchen Fällen empfiehlt es sich auch, auf einen vorgeschalteten, separaten Hydrolyseschritt zu verzichten. Nach erfolgter Neutralisation können Wasserspuren, die durch Zugabe verdünnter Säuren eingebracht wurden bzw. überschüssiges Hydrolysewasser im Vakuum entfernt werden. Den Produkten können während oder nach der Neutralisation Alterungsschutzmittel bzw. Antioxidantien zugesetzt werden. Weitere Aufarbeitungsschritte, wie beispielsweise eine Filtration des Produktes, sind nicht notwendig.

Geeignete Starterverbindungen mit Zerewitinoff-aktiven Wasserstoffatomen weisen meist Funktionalitäten von 1 bis 8 auf, in bestimmten Fällen aber auch Funktionalitäten bis 35. Ihre Molmassen betragen von 60 g/mol bis 1.200 g/mol. Neben hydroxyfunktionellen Startern können auch aminofunktionelle Starter eingesetzt werden. Beispiele für hydroxyfunktionelle Starterverbindungen sind Methanol, Ethanol, 1-Propanol, 2-Propanol und höhere aliphatische Monole, insbesondere Fettalkohole, Phenol, alkylsubstituierte Phenole, Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Pentaerythrit, Sorbit, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff, sowie Mannichbasen. Es können auch hochfunktionelle Starterverbindungen auf Basis von hydrierten Stärkehydrolyseprodukten eingesetzt werden. Solche sind beispielsweise in EP-A 1 525 244 beschrieben. Beispiele für aminogruppenhaltige Starterverbindungen sind Ammoniak, Ethanolamin, Diethanolamin, Triethanolamin, Isopropanolamin, Diisopropanolamin, Ethylendiamin, Hexamethylendiamin, Anilin, die Isomere des Toluidins, die Isomere des Diaminotoluols, die Isomere des Diaminodiphenylmethans sowie bei der Kondensation von Anilin mit Formaldehyd zu Diaminodiphenylmethan anfallende höherkernige Produkte. Außerdem können als Starterverbindungen auch Ringöffnungsprodukte aus cyclischen Carbonsäureanhydriden und Polyolen eingesetzt werden. Beispiele sind Ringöffnungsprodukte aus Phthalsäureanhydrid, Bernsteinsäureanhydrid, Maleinsäureanhydrid einerseits und Ethylenglykol, Diethylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Pentaerythrit oder Sorbit andererseits. Es können natürlich auch Gemische verschiedener Starterverbindungen eingesetzt werden.

Ferner können dem Prozess auch vorgefertigte Alkylenoxidadditionsprodukte der erwähnten Starterverbindungen, also Polyetherpolyole mit OH-Zahlen von 20 bis 1.000 mg KOH/g, bevorzugt 250 bis 1000 mg KOH/g, zugesetzt werden. Die bei der Herstellung der vorgefertigten Alkylenoxidadditionsprodukte eingesetzten Alkylenoxidgemische enthalten mindestens 10 Gew.-% Ethylenoxid, bevorzugt mindestens 20 Gew.-% Ethylenoxid und besonders bevorzugt mehr als 50 Gew.-% Ethylenoxid. Auch ist es möglich, im erfindungsgemäßen Prozess neben den Starterverbindungen auch Polyesterpolyole mit OH-Zahlen im Bereich von 6 bis 800 mg KOH/g mit dem Ziel der Polyetheresterherstellung einzusetzen. Hierfür geeignete Polyesterpolyole können beispielsweise aus organischen Dicarbonsäuren mit 2 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen nach bekannten Verfahren hergestellt werden.

Vor dem Hintergrund der Verknappung petrochemischer Ressourcen und der nachteiligen Bewertung fossiler Rohstoffe in Ökobilanzen gewinnt der Einsatz von Rohstoffen aus nachwachsenden Quellen auch bei der Herstellung von für die Polyurethanindustrie geeigneten Polyolen zunehmend an Bedeutung. Das erfindungsgemäße Verfahren eröffnet eine hochwirtschaftliche Möglichkeit zur Herstellung solcher Polyole, indem vor oder während der Addition der Alkylenoxide Triglyceride wie beispielsweise Sojaöl, Rapsöl, Palmkernöl, Palmöl, Leinöl, Sonnenblumenöl, Heringsöl, Sardinenöl, Lesquerellaöl und Ricinusöl dem Prozess in Mengen von 10-80 Gew.%, bezogen auf die Endproduktmenge, zugesetzt werden. Man erhält Polyetheresterpolyole, in deren Struktur die Öle vollständig eingebaut sind, so dass sie im Endprodukt nicht mehr oder nur in sehr geringen Mengen nachgewiesen werden können.

Die erwähnten, als Katalysator verwendbaren polymeren Alkoxylate werden in einem separaten Reaktionsschritt durch Alkylenoxidaddition an zerewitinoff-aktive Wasserstoffatome enthaltende Starterverbindungen hergestellt. Üblicherweise wird bei der Herstellung des polymeren Alkoxylates ein Alkali- oder Erdalkalimetallhydroxid, z. B. KOH, in Mengen von 0,1 bis 1 Gew.-%, bezogen auf die herzustellende Menge als Katalysator, eingesetzt, das Reaktionsgemisch, falls erforderlich, im Vakuum entwässert, die Alkylenoxidadditionsreaktion unter Inertgasatmosphäre bei 100 bis 170°C bis zum Erreichen einer OH-Zahl von 150 bis 1200 mg KOH/g durchgeführt und danach gegebenenfalls durch Zugabe weiteren Alkali- oder Erdalkalimetallhydroxids und anschließendem Entwässern auf die oben genannten Alkoxylatgehalte von 0,05 bis 50 Äquivalenz-% eingestellt. Solchermaßen hergestellte polymere Alkoxylate können separat unter Inertgasatmosphäre gelagert werden. Sie werden im erfindungsgemäßen Verfahren besonders dann bevorzugt verwendet, wenn Einsatzstoffe Verwendung finden, die unter alkalischen Bedingungen hydrolyseempfindlich sind oder die Menge an niedermolekularem Starter bei der Herstellung langkettiger Polyole nicht ausreichend ist, um zu Reaktionsbeginn eine ausreichende Durchmischung des Reaktionsgemisches zu gewährleisten. Ferner neigen bestimmte niedermolekulare Starter zur Bildung schwerlöslicher Alkali- oder Erdalkalimetallsalze; in solchen Fällen empfiehlt sich die vorgeschaltete Überführung des Starters nach dem oben geschilderten Verfahren in ein polymeres Alkoxylat ebenfalls. Die Menge des im erfindungsgemäßen Verfahren eingesetzten polymeren Alkoxylates wird üblicherweise so bemessen, dass sie einer auf die Menge des herzustellenden, erfindungsgemäßen Endproduktes bezogenen Alkali- oder Erdalkalimetallhydroxidkonzentration von 0,004 bis 0,2 Gew.-%, bevorzugt 0,004 bis 0,07 Gew.-% entspricht. Die polymeren Alkoxylate können natürlich auch als Gemische eingesetzt werden.

Geeignete Alkylenoxide sind beispielsweise Ethylenoxid, Propylenoxid, 1,2-Butylenoxid bzw. 2,3-Butylenoxid und Styroloxid. Bevorzugt werden Propylenoxid und Ethylenoxid eingesetzt. Wie bereits erwähnt, sollten bevorzugt mindestens 10, besonders bevorzugt mindestens 20 und ganz besonders bevorzugt mehr als 50 Gew.-% Ethylenoxid, bezogen auf die Gesamtmenge der dosierten Alkylenoxide, enthalten sein. Werden die im vorangehenden Abschnitt erwähnten polymeren Alkoxylate als Katalysatoren verwendet, oder die oben erwähnten, vorgefertigten Alkylenoxidadditionsprodukte als Komponenten im Startergemisch eingesetzt, so gehen die bei ihrer Herstellung verwendeten Ethylenoxidmengen in die Berechnung des Gesamtethylenoxidgehaltes mit ein. Das Ethylenoxid kann im Gemisch mit den anderen Alkylenoxiden oder blockweise als Anfangs-, Mittel- oder Endblock dosiert werden. Produkte mit Ethylenoxidendblöcken sind beispielsweise durch erhöhte Konzentrationen an primären Endgruppen gekennzeichnet, welche den Systemen die für Formschaumanwendungen notwendige Isocyanatreaktivität verleihen.

Die alkalischen Rohpolyole weisen im Allgemeinen OH-Zahlen von 20 bis 1.000 mg KOH/g, bevorzugt OH-Zahlen von 28 bis 700 mg KOH / g auf.

Die Aufarbeitung der alkalischen Rohpolyole erfolgt durch Zugabe von einbasischen anorganischen Säuren wie beispielsweise Halogenwasserstoffsäuren, Salpetersäure, Iodsäure, Periodsäure, Bromsäure, Chlorsäure oder Perchlorsäure. Bevorzugt sind die Perchlorsäure, die Halogenwasserstoffsäuren und Salpetersäure. Die Neutralisation kann bei Reaktionstemperatur durchgeführt werden. Bevorzugt werden stöchiometrische Mengen der einbasischen anorganischen Säuren in Bezug auf die zu neutralisierende Katalysatormenge eingesetzt. Sind hydrolyseemplindliche funktionelle Gruppen wie beispielsweise Estergruppen zugegen, kann auch bei deutlich tieferer Temperatur, beispielsweise bei Raumtemperatur, neutralisiert werden. Mit der oder den Neutralisationssäure(n) eingebrachtes Wasser kann im Vakuum entfernt werden. Weitere Aufarbeitungsschritte, wie beispielsweise eine Filtration des Produktes, sind nicht notwendig.

Der eigentlichen Neutralisation kann ein separater Hydrolyseschritt vorgeschaltet sein, der für das erfindungsgemäße Verfahren jedoch nicht von essentieller Bedeutung ist. Die Wassermenge beträgt bei einem solchen Hydrolyseschritt bis zu 15 Gew.%, bezogen auf die Menge des alkalischen Alkylenoxidadditionsproduktes

Die nach dem Verfahren erhältlichen Polyole können als Ausgangskomponenten für die Herstellung von massiven oder geschäumten Polyurethanwerkstoffen sowie von Polyurethanelastomeren eingesetzt werden. Die Polyurethanwerkstoffe und -elastomere können auch Isocyanurat-, Allophanat- und Biuretstruktureinheiten enthalten. Ebenfalls möglich ist die Herstellung sogenannter Isocyanat-Prepolymere, bei deren Herstellung ein molares Verhältnis von Isocyanatgruppen zu Hydroxygruppen von größer 1 verwendet wird, so dass das Produkt freie Isocyanatfunktionalitaten enthält. Diese werden erst bei der Herstellung des eigentlichen Endproduktes in einem oder mehreren Schritten umgesetzt.

Zur Herstellung dieser Materialien werden die Polyole gegebenenfalls mit weiteren isocyanatreaktiven Komponenten gemischt und mit organischen Polyisocyanaten, gegebenenfalls in Gegenwart von Treibmitteln in Gegenwart von Katalysatoren, gegebenenfalls in Gegenwart anderer Zusatzstoffe wie z. B. Zellstabilisatoren, zur Reaktion gebracht

### Beispiele

### Eingesetzte Rohstoffe:

**Sojaöl**: Sojaöl (raffiniert, d.h. entlecithiniert, neutralisiert, entfärbt und dampfgestrippt), bezogen von der Sigma-Aldrich Chemie GmbH, München.

### Herstellung des polymeren Alkoxylates 1:

In einen 10 1 Laborautoklaven wurden unter Stickstoffatmosphäre 1278,5 g Trimethylolpropan und 21,7 g einer 45 Gew.%igen Lösung von KOH in Wasser gegeben. Der Autoklav wurde verschlossen, die Rührerdrehzahl auf 450 U/min. eingestellt und man heizte auf 107°C auf. Der Druck wurde auf 100 mbar abgesenkt und 653,4 g Propylenoxid wurden über einen Zeitraum von 3 h in den Autoklaven dosiert. Nach einer Nachreaktionszeit von 30 min. bei 107°C wurde der Ansatz 30 min. im Vakuum ausgeheizt. Nach Abkühlen auf Raumtemperatur wurden unter Stickstoffatmosphäre 45,1 g einer 45 Gew.-%igen Lösung von KOH in Wasser zugegeben. Man erwärmte auf 107°C und entfernte das Wasser im Vakuum, bis ein Druck von 10 mbar erreicht war. Sodann wurden 4063,6 g Propylenoxid über einen Zeitraum von 8,5 h bei 107°C eindosiert, nach einer Nachreaktionszeit von 120 min. wurde für 30 min. im Vakuum ausgeheizt Nach Abkühlen auf Raumtemperatur wurden unter Stickstoffatmosphäre 539,4 g einer 45 Gew.-%igen Lösung von KOH in Wasser zugegeben. Man erwärmte auf 107°C und entfernte das Wasser im Vakuum, bis ein Druck von 10 mbar erreicht war. Die Alkalizahl des polymeren Alkoxylates 1 beträgt 44,1 mg KOH / g, seine OH-Zahl 260 mg KOH / g. Der Alkoxylatgehalt beträgt 17%.

### Herstellung des polymeren Alkoxylates 2:

In einen 10 1 Laborautoklaven wurden unter Stickstoffatmosphäre 3677,2 g Glycerin und 18,65 g einer 45 Gew.%igen Lösung von KOH in Wasser gegeben. Der Autoklav wurde verschlossen, die Rührerdrehzahl auf 450 U/min. eingestellt und man heizte auf 110°C auf. Der Druck wurde auf 100 mbar abgesenkt und 2313,7 g Propylenoxid wurden über einen Zeitraum von 4,6 h in den Autoklaven dosiert. Nach einer Nachreaktionszeit von 180 min. bei 1110°C wurde der Druck langsam wieder auf 100 mbar abgesenkt und der Ansatz schließlich im Vakuum von Wasser befreit bis bei einer Temperatur von 110°C ein Druck von weniger als 10 mbar erreicht war. Die Alkalizahl des polymeren Alkoxylates 2 beträgt 1,4 mg KOH / g, seine OH-Zahl 1121 mg KOH / g. Der Alkoxylatgehalt beträgt 0,125%.

### Irganox^{®} 1076: Octadecyl-3-(3,5-di-tert.butyl-4-hydroxyphenyl)propionat

### Neutratisationsmethode:

In allen Beispielen und Vergleichsbeispielen wurde exakt die zu 100% iger Neutralisation der Base (KOH) notwendige Säuremenge eingesetzt, also 1 mol Säure / mol KOH im Falle der erfindungsgemäß zu verwendenden einbasischen anorganischen Säuren und Phosphorsäure bzw. 0,5 mol Schwefelsäure / mol KOH.

### Beispiel 1 (Vergleich)

In einen 10 1 Laborautoklaven wurden unter Stickstoffatmosphäre 27,6 g polymeres Alkoxylat 1 und 1213,0 g Trimethylolpropan gegeben. Der Autoklav wurde verschlossen und mit 1,5 bar Stickstoffdruck beaufschlagt. Man erwärmte unter Rühren (450 U/min) auf 150°C und dosierte 4646,9 g Ethylenoxid bei einer Rührerdrehzahl von ebenfalls 450 U/min. über einen Zeitraum von 13,2 h in den Autoklaven. Während dieser Dosierzeit wurde zwischenzeitlich ein Reaktordruck von 4 bar erreicht, man ließ dann 25 min. abreagieren, senkte den Druck durch Ablassen des Stickstoffs auf 2,55 bar und nahm die Ethylenoxiddosierung wieder auf. Nach Ende der Ethylenoxiddosierung schloss sich eine Nachreaktionszeit von 45 min. Dauer an. Der Ansatz wurde 30 min im Vakuum ausgeheizt und danach auf Raumtemperatur abgekühlt Die auf KOH berechnete Katalysatorkonzentration betrug 200 ppm.

936 g des Produktes wurden bei 80°C mit 75 g destilliertem Wasser, 1,4571 g 11,83 %iger Schwefelsäure und 1,038 g Irganox^{®} 1076 versetzt und 1 h bei 80°C verrührt. Das Produkt wurde danach 1 h bei 18 mbar (Wasserstrahlvakuum) und anschließend bei 110°C 3 h bei 1 mbar entwässert. Danach zeigte das Produkt eine schwache Trübung.

### Beispiel 2 (Vergleich)

In einen 2 1 Laborautoklaven wurden unter Stickstoffatmosphäre 5,49 g polymeres Alkoxylat 1 und 243,7 g Trimethylolpropan gegeben. Der Autoklav wurde verschlossen und sein Inhalt unter Rühren (700 U/min) auf 150°C erwärmt. Man dosierte 956,9 g Ethylenoxid bei einer Rührerdrehzahl von ebenfalls 700 U/min. über einen Zeitraum von 6 h in den Autoklaven. Gegen Ende der Ethylenoxiddosierphase wurde ein Reaktordruck von 1,9 bar erreicht. Nach Ende der Ethylenoxiddosierung schloss sich eine 20 minütige Nachreaktionszeit an. Der Ansatz wurde 30 min im Vakuum aus geheizt. Die auf KOH berechnete Katalysatorkonzentration betrug 200 ppm.

556,5 g des Produktes wurden bei 80°C mit 56 g destilliertem Wasser und 5,9675 g 3,293 %iger Phosphorsäure versetzt und 1/2 h bei 80°C verrührt. Nach Zugabe von 0,622 g Irganox^{®} 1076 wurde das Produkt 1 h bei 18 mbar (Wasserstrahlvakuum) und anschließend bei 110°C 3 h bei 1 mbar entwässert. Man erhielt ein trübes Produkt.

### Beispiel 3

In einen 10 1 Laborautoklaven wurden unter Stickstoffatmosphäre 13,56 g polymeres Alkoxylat 1 und 1215,2 g Trimethylolpropan gegeben. Der Autoklav wurde verschlossen und mit 1,9 bar Stickstoffdruck beaufschlagt. Man erwärmte unter Rühren (450 U/min) auf 150°C und dosierte 4771,5 g Ethylenoxid bei einer Rührerdrehzahl von ebenfalls 450 U/min. über einen Zeitraum von 10,8 h in den Autoklaven. Während dieser Dosierzeit wurde die Dosierung 3 mal unterbrochen, man ließ abreagieren, senkte den Druck durch Ablassen des Stickstoffs auf 2,5 bar und nahm sodann die Ethylenoxiddosierung wieder auf. Nach Ende der Ethylenoxiddosierung schloss sich eine Nachreaktionszeit von 1 h Dauer an. Nach einer Ausheizzeit von 30 min im Vakuum und Abkühlen auf Raumtemperatur wurden dem Ansatz 2 Anteile für Neutralisationsversuche (Beispiele 3A und 3B) entnommen. Die auf KOH berechnete Katalysatorkonzentration betrug 100 ppm.

### Beispiel 3A (Vergleich)

987,1 g des Produktes aus Beispiel 3 wurden bei 80°C unter Stickstoffatmosphäre mit 0,206 g 85 %iger Phosphorsäure versetzt und 1 h bei 80°C verrührt. Nach Zugabe von 0,495 g Irganox^{®} 1076 wurde das Produkt 1 h bei 18 mbar (Wasserstrahlvakuum) und anschließend bei 110°C und 1 mbar 3 h entwässert. Man erhielt ein leicht trübes Produkt.

### Beispiel 3B

1023,1 g des Produktes aus Beispiel 3 wurden bei 80°C unter Stickstoffatmosphäre mit 1,818 g Salzsäure (Konzentration: 1 mol / kg) versetzt und 1 h bei 80°C verrührt. Nach Zugabe von 0,516 g Irganox^{®} 1076 wurde das Produkt 1 h bei 18 mbar (Wasserstrahlvakuum) und anschließend bei 110°C und 1 mbar 3 h entwässert. Man erhielt ein klares Produkt.

### Beispiel 4

In einen 10 1 Laborautoklaven wurden unter Stickstoffatmosphäre 64,2 g polymeres Alkoxylat 1 und 1202,9 g Trimethylolpropan gegeben. Der Autoklav wurde verschlossen und mit 1,5 bar Stickstoffdruck beaufschlagt. Man erwärmte unter Rühren (450 U/min) auf 150°C und dosierte 4733,3 g Ethylenoxid bei einer Rührerdrehzahl von ebenfalls 450 U/min. über einen Zeitraum von 14,23 h in den Autoklaven. Während dieser Dosierzeit wurde zwischenzeitlich ein Reaktordruck von 4 bar erreicht; man ließ dann 20 min. abreagieren, senkte den Druck durch Ablassen des Stickstoffs auf 2,55 bar und nahm die Ethylenoxiddosierung wieder auf. Nach Ende der Ethylenoxiddosierung schloss sich eine Nachreaktionszeit von 31 min. Dauer an. Nach einer Ausheizphase von 30 min. Dauer im Vakuum und Abkühlen auf Raumtemperatur wurde der Ansatz für Neutralisationsexperimente in drei Anteile (Beispiele 4A, 4B und 4C) geteilt. Die auf KOH berechnete Katalysatorkonzentration betrug 470 ppm.

### Beispiel 4A (Vergleich)

1683,8 des Produktes aus Beispiel 4 wurden bei 80°C unter Stickstoffatmosphäre mit 169 ml destilliertem Wasser und 5,813 g 11,89 %iger Schwefelsäure versetzt und 1 h bei 80°C verrührt. Nach Zugabe von 1,857 g Irganox^{®} 1076 wurde das Produkt 1 h bei 18 mbar (Wasserstrahlvakuum) und anschließend bei 110°C und 1 mbar 3 h entwässert. Man erhielt ein trübes Produkt.

### Beispiel 4B

2127,8 g des Produktes aus Beispiel 4 wurden bei 80°C unter Stickstoffatmosphäre mit 8,951 g 20 %iger Perchlorsäure versetzt und 1 h bei 80°C verrührt. Nach Zugabe von 2,340 g Irganox^{®} 1076 wurde das Produkt 1 h bei 18 mbar (Wasserstrahlvakuum) und anschließend bei 110°C und 1 mbar 3 h entwässert. Man erhielt ein klares Produkt.

### Beispiel 4C

2130,4 g des Produktes aus Beispiel 4 wurden bei 80°C unter Stickstoffatmosphäre mit 17,91 g Salzsäure (Konzentration: 1 mol / kg) versetzt und 1 h bei 80°C verrührt. Nach Zugabe von 2,349 g Irganox^{®} 1076 wurde das Produkt 1 h bei 18 mbar (Wasserstrahlvakuum) und anschließend bei 110°C und 1 mbar 3 h entwässert. Man erhielt ein klares Produkt.

### Beispiel 5

In einen 10 1 Laborautoklaven wurden unter Stickstoffatmosphäre 1200 g polymeres Alkoxylat 2 und 79,8 g Glycerin gegeben. Der Autoklav wurde verschlossen, unter Rühren (450 U/min) auf 150°C erwärmt und mit 2,7 bar Stickstoffdruck beaufschlagt. Bei 150°C wurden 4721,6 g Ethylenoxid bei einer Rührerdrehzahl von ebenfalls 450 U/min. über einen Zeitraum von 8,1 h in den Autoklaven dosiert. Während dieser Dosierzeit wurde die Dosierung einmal unterbrochen, man ließ abreagieren, senkte den Druck durch Ablassen des Stickstoffs auf 2,5 bar und nahm sodann die Ethylenoxiddosierung wieder auf. Nach Ende der Ethylenoxiddosierung schloss sich eine Nachreaktionszeit von 1 h Dauer an. Nach einer Ausheizzeit von 30 min im Vakuum und Abkühlen auf Raumtemperatur wurden dem Ansatz drei Anteile für Neutralisationsversuche (Beispiele 5A, 5B und 5C) entnommen. Die auf KOH berechnete Katalysatorkonzentration betrug 280 ppm.

### Beispiel 5A (Vergleich)

1523,2 g des Produktes aus Beispiel 5 wurden bei 80°C unter Stickstoffatmosphäre mit 3,169 g 11,89 %iger Schwefelsäure versetzt und 1 h bei 80°C herrührt Nach Zugabe von 0,750 g Irganox^{®} 1076 wurde das Produkt 1 h bei 18 mbar (Wasserstrahlvakuum) und anschließend bei 110°C und 1 mbar 3 h entwässert. Man erhielt ein leicht trübes Produkt

### Beispiel 5B

1461,8 g des Produktes aus Beispiel 5 wurden bei 80°C unter Stickstoffatmosphäre mit 7,407 g Salzsäure (Konzentration: 1 mol / kg) versetzt und 1 h bei 80°C verrührt. Nach Zugabe von 0,744 g Irganox^{®} 1076 wurde das Produkt 1 h bei 18 mbar (Wasserstrahlvakuum) und anschließend bei 110°C und 1 mbar 3 h entwässert. Man erhielt ein klares Produkt.

### Beispiel 5C

1372,3 g des Produktes aus Beispiel 5 wurden bei 80°C unter Stickstoffatmosphäre mit 3,463 g 20,35 %iger Perchlorsäure versetzt und 1 h bei 80°C verrührt. Nach Zugabe von 0,705 g Irganox^{®} 1076 wurde das Produkt 1 h bei 18 mbar (Wasserstrahlvakuum) und anschließend bei 110°C und 1 mbar 3 h entwässert Man erhielt ein klares Produkt.

### Beispiel 6

In einen 10 1 Laborautoklaven wurden unter Stickstoffatmosphäre 325,5 g Sorbit und 3,209 g einer 44,82 %igen Lösung von KOH in Wasser gegeben. Der Autoklav wurde verschlossen und sein Inhalt bei 110°C über einen Zeitraum von 3 h und bei einer Rührerdrehzahl von 450 U/min im Vakuum mit 50 ml Stickstoff pro Minute gestrippt Man erwärmte unter Rühren (450 U/min) auf 150°C und dosierte über einen Zeitraum von 3,22 h 1135,1 g Propylenoxid so in den Autoklaven, dass ein konstanter Druck von 5 bar erreicht wurde. Nach einer Nachreaktionszeit von 2,45 h wurden der Reaktordruck mit Stickstoff auf 2,7 bar eingestellt und 4540,2 g Ethylenoxid über einen Zeitraum von 9,07 h eindosiert. Während dieser Dosierzeit wurde die Dosierung bei Erreichen von 5 bar Reaktordruck zweimal unterbrochen, man ließ jeweils abreagieren, senkte den Druck durch Ablassen des Stickstoffs auf 2,5 bar und nahm sodann die Alkylenoxiddosierung wieder auf. Nach Ende der Ethylenoxiddosierung schloss sich eine Nachreaktionszeit von 1,5 h Dauer an. Nach einer Ausheizzeit von 30 min im Vakuum wurde auf Raumtemperatur abgekühlt. Die auf KOH berechnete Katalysatorkonzentration betrug 240 ppm. 2033,1 g des Produktes wurden bei 80°C mit 5,300 g 10,35 %iger Salpetersäure versetzt und 0,1 h bei 80°C verrührt. Nach Zugabe von 1,018 g Irganox^{®} 1076 wurde das Produkt bei 110°C 3 h bei 1 mbar entwässert. Man erhielt ein klares Produkt

### Beispiel 7

In einen 10 1 Laborautoklaven wurden unter Stickstoffatmosphäre 821,9 g Glycerin und 1,609 g einer 44,82 %igen Lösung von KOH in Wasser gegeben. Der Autoklav wurde verschlossen und sein Inhalt bei 110°C über einen Zeitraum von 3 h und bei einer Rührerdrehzahl von 450 U/min im Vakuum mit 50 ml Stickstoff pro Minute gestrippt. Man erwärmte unter Rühren (450 U/min) auf 150°C und dosierte über einen Zeitraum von 11,7 h 4150,1 g Propylenoxid so in den Autoklaven, dass ein konstanter Druck von 5 bar erreicht wurde. Nach Ende der Propylenoxiddosierphase schloss sich eine Nachreaktionszeit von 3 h Dauer an. Der Reaktor wurde sodann mit 2,5 bar Stickstoffdruck beaufschlagt und 1037,5 g Ethylenoxid wurden über einen Zeitraum von 4,25 h dosiert. Nach Ende der Ethylenoxiddosierung schloss sich eine Nachreaktionszeit von 1,5 h Dauer an. Nach einer Ausheizzeit von 30 min im Vakuum und Abkühlen auf Raumtemperatur wurden dem Ansatz drei Anteile für Neutralisationsversuche (Beispiele 7A, 7B und 7C) entnommen. Die auf KOH berechnete Katalysatorkonzentration betrug 120 ppm.

### Beispiel 7A

1117,3 g des Produktes aus Beispiel 7 wurden bei 80°C unter Stickstoffatmosphäre und Rühren mit 1,449 g 10,35 %iger Salpetersäure versetzt und 1 h bei 80°C verrührt. Nach Zugabe von 0,563 g Irganox^{®} 1076 wurde das Produkt 1 h bei 18 mbar (Wasserstrahlvakuum) und anschließend bei 110°C und 1 mbar 3 h entwässert. Man erhielt ein klares Produkt.

### Beispiel 7B

1362,9 g des Produktes aus Beispiel 7 wurden bei 80°C unter Stickstoffatmosphäre und Rühren mit 136,3 g Wasser und danach mit 1,4351 g 20,35 %iger Perchlorsäure versetzt und 1 h bei 80°C verrührt. Nach Zugabe von 0,688 g Irganox^{®} 1076 wurde das Produkt 1 h bei 18 mbar (Wasserstrahlvakuum) und anschließens bei 110°C und 1 mbar 3 h entwässert. Man erhielt ein klares Produkt.

### Beispiel 7C (Vergleich)

1129,3 g des Produktes aus Beispiel 7 wurden bei 80°C unter Stickstoffatmosphäre und Rühren mit 1,002 g 11,80 %iger Schwefelsäure versetzt und 1 h bei 80°C verrührt. Nach Zugabe von 0,567 g Irganox^{®} 1076 wurde das Produkt 1 h bei 18 mbar (Wasserstrahlvakuum) und anschließend bei 110°C und 1 mbar 3 h entwässert. Man erhielt ein leicht trübes Produkt.

### Beispiels 8

In einen 10 1 Laborautoklaven wurden unter Stickstoffatmosphäre 820,7 g Glycerin und 1,472 g einer 44,82 Gew.%igen Lösung von KOH in Wasser gegeben. Der Autoklav wurde verschlossen und sein Inhalt bei 110°C über einen Zeitraum von 3 h und bei einer Rührerdrehzahl von 450 U/min im Vakuum mit 50 ml Stickstoff pro Minute gestrippt. Man erwärmte unter Rühren (450 U/min) auf 150°C und beaufschlagte mit 1,7 bar Stickstoffdruck. Bei 150°C wurde ein Gemisch aus 3884,5 g Ethylenoxid und 1289,2 g Propylenoxid bei einer Rührerdrehzahl von ebenfalls 450 U/min. über einen Zeitraum von 10,53 h in den Autoklaven dosiert. Während dieser Dosierzeit wurde die Dosierung bei Erreichen von 5 bar Reaktordruck zweimal unterbrochen, man ließ jeweils abreagieren, senkte den Druck durch Ablassen des Stickstoffs auf 1,7 bar und nahm sodann die Alkylenoxiddosierung wieder auf. Nach der Alkylenoxiddosierphase schloss sich eine Nachreaktionszeit von 3,25 h Dauer an. Nach einer Ausheizzeit von 30 min im Vakuum und Abkühlen auf Raumtemperatur wurden dem Ansatz zwei Anteile für Neutralisationsversuche (Beispiele 8A und 8B) entnommen. Die auf KOH berechnete Katalysatorkonzentration betrug 110 ppm.

### Beispiel 8A

2148,2 g des Produktes aus Beispiel 8 wurden bei 80°C unter Stickstoffatmosphäre und Rühren mit 2,589 g 10,35 %iger Salpetersäure versetzt und 1 h bei 80°C verrührt. Nach Zugabe von 1,081 g Irganox^{®} 1076 wurde das Produkt 1 h bei 18 mbar (Wasserstrahlvakuum) und anschließend bei 110°C und 1 mbar 3 h entwässert. Man erhielt ein klares Produkt.

### Beispiel 8B

1295,1 g des Produktes aus Beispiel 8 wurden bei 80°C unter Stickstoffatmosphäre und Rühren mit 1,3712 g 20,35 %iger Perchlorsäure versetzt und 1 h bei 80°C verrührt. Nach Zugabe von 0,658 g Irganox^{®} 1076 wurde das Produkt 1 h bei 18 mbar (Wasserstrahlvakuum) und anschließend 3 h bei 110°C und 1 mbar entwässert. Man erhielt ein klares Produkt.

### Beispiele 9

In einen 10 1 Laborautoklaven wurden unter Stickstoffatmosphäre 1817,6 g Trimethylolpropan und 4,042 g einer 44,8 Gew.-%igen Lösung von KOH in Wasser gegeben. Der Autoklav wurde verschlossen und sein Inhalt bei 110°C über einen Zeitraum von 3 h und bei einer Rührerdrehzahl von 450 U/min im Vakuum mit 50 ml Stickstoff pro Minute gestrippt. Sodann wurde auf 150°C erwärmt und 4182,4 g Propylenoxid bei einer Rührerdrehzahl von ebenfalls 450 U/min. über einen Zeitraum von 10,6 h in den Autoklaven dosiert. Die Propylenoxiddosierung wurde bei einem Druck von 1,1 bar begonnen, während der Dosierphase wurde ein Druck von 4,95 bar erreicht. Nach Ende der Propylenoxiddosierung schloss sich eine Nachreaktionszeit von 7 h Dauer an. Nach einer Ausheizzeit von 30 min im Vakuum und Abkühlen auf Raumtemperatur wurden dem Ansatz zwei Anteile für Neutralisationsversuche (Beispiele 9A und 9B) entnommen. Die Katalysatorkonzentration (KOH) betrug 300 ppm.

### Beispiel 9A (Vergleich)

2274 g des Produktes aus Beispiel 9 wurden bei 80°C unter Stickstoffatmosphäre mit 7,930 g 10,35 %iger Salpetersäure versetzt und 1 h bei 80°C verrührt. Nach Zugabe von 1,140 g Irganox^{®} 1076 wurde das Produkt 1 h bei 18 mbar (Wasserstrahlvakuum) und anschließend bei 110°C und 1 mbar 3 h entwässert. Man erhielt ein trübes Produkt.

### Beispiel 9B (Vergleich

2332 g des Produktes aus Beispiel 9 wurden bei 80°C unter Stickstoffatmosphäre mit 6,126 g 20,35 %iger Perchlorsäure versetzt und 1 h bei 80°C verrührt. Nach Zugabe von 1,160 g Irganox^{®} 1076 wurde das Produkt 1 h bei 18 mbar (Wasserstrahlvakuum) und anschließend bei 110°C und 1 mbar 3 h entwässert. Man erhielt ein trübes Produkt.

### Beispiel 10

In einen 10 I Laborautoklaven wurden unter Stickstoffatmosphäre 688,5 g Sorbit und 2,547 g einer 44,82 Gew.-%igen Lösung von KOH in Wasser gegeben. Der Autoklav wurde verschlossen und sein Inhalt bei 110°C über einen Zeitraum von 3 h und bei einer Rührerdrehzahl von 450 U/min im Vakuum mit 50 ml Stickstoff pro Minute gestrippt. Man gab bei etwa 110°C unter Stickstoffatmosphäre 3298,3 g Sojaöl zu und erwärmte unter Rühren (450 U/min) auf 130°C. Der Druck wurde mit Stickstoff auf 2,5 bar eingestellt. Bei 130°C wurden 2021,5 g Ethylenoxid über einen Zeitraum von 7,15 h so in den Autoklaven dosiert, dass ein Gesamtdruck von 5 bar nicht überschritten wurde. Nach Ende der Ethylenoxiddosierung schloss sich eine Nachreaktionszeit von 5,95 h Dauer an. Die Katalysatorkonzentration (KOH) betrug 190 ppm. Nach einer Ausheizphase von 30 min. Dauer im Vakuum und Abkühlen auf Raumtemperatur wurde dem Ansatz zwei Anteile für Neutralisationsversuche (Beispiele 10A und 10B) entnommen.

### Beispiel 10A

2162 g des Produktes aus Beispiel 10 wurden bei 40°C unter Stickstoffatmosphäre mit 7,425 g Salzsäure (Konzentration: 1 mol / kg) versetzt und 1 h bei 40°C verrührt. Nach Zugabe von 1,084 g Irganox^{®} 1076 wurde das Produkt bei 110°C und 1 mbar 3 h entwässert. Man erhielt ein klares Produkt.

### Bespiel 10B

1889 g des Produktes aus Beispiel 10 wurden bei 40°C unter Stickstoffatmosphäre mit 3,154 g 20,35 %iger Perchlorsäure versetzt und 1 h bei 40°C verrührt. Nach Zugabe von 0,945 g Irganox^{®} 1076 wurde das Produkt bei 110°C und 1 mbar 3 h entwässert. Man erhielt ein klares Produkt.

### Beispiel 11

In einen 10 1 Laborautoklaven wurden unter Stickstoffatmosphäre 820,9 g Glycerin und 1,742 g einer 44,82 Gew.%igen Lösung von KOH in Wasser gegeben. Der Autoklav wurde verschlossen und sein Inhalt bei 150°C über einen Zeitraum von 3 h und bei einer Rührerdrehzahl von 450 U/min im Vakuum mit 50 ml Stickstoff pro Minute gestrippt. Man dosierte 1035,9 g Ethylenoxid bei einer Rührerdrehzahl von ebenfalls 450 U/min. über einen Zeitraum von 2,67 h in den Autoklaven. Die Ethylenoxidzugabe wurde bei einem Stickstoffdruck von 2,55 bar gestartet, während der Dosierphase wurde ein Maximaldruck von 4 bar erreicht. Nach einer Nachreaktionszeit von 1,52 h wurde der Druck auf 0,05 bar gesenkt. Bei ebenfalls 150°C wurden 4143,5 g Propylenoxid in 10,25 h eindosiert, der maximale Reaktordruck erreichte hierbei 5 bar. Nach Ende der Propylenoxiddosierung schloss sich eine Nachreaktionszeit von 11 h Dauer an. Nach einer Ausheizzeit von 30 min im Vakuum und Abkühlen auf Raumtemperatur wurden dem Ansatz drei Anteile für Neutralisationsversuche (Beispiele 11A, 11B und 11C) entnommen. Die Katalysatorkonzentration (KOH) betrug 130 ppm.

### Beispiel 11A

1516,3 g des Produktes aus Beispiel 11 wurden bei 80°C unter Stickstoffatmosphäre mit 1,749 g 20,35 Gew.%iger Perchlorsäure versetzt und 1 h bei 80°C verrührt. Nach Zugabe von 0,76 g Irganox^{®} 1076 wurde das Produkt 1 h bei 18 mbar (Wasserstrahlvakuum) und anschließend bei 110°C und 1 mbar 3 h entwässert. Man erhielt ein klares Produkte.

### Beispiel 11B

1352,7 g des Produktes aus Beispiel 11 wurden bei 80°C unter Stickstoffatmosphäre mit 1,918 g 10,35 Gew.-%iger Salpetersäure versetzt und 1 h bei 80°C verrührt. Nach Zugabe von 0,682 g Irganox^{®} 1076 wurde das Produkt 1 h bei 18 mbar (Wasserstrahlvakuum) und anschließend bei 110°C und 1 mbar 3 h entwässert. Man erhielt ein klares Produkt

### Beispiel 11C

1277,6 g des Produktes aus Beispiel 11 wurden bei 80°C unter Stickstoffatmosphäre mit 3,03 g Salzsäure (Konzentration: 1 mol / kg) versetzt und 1 h bei 80°C verrührt. Nach Zugabe von 0,646 g Irganox^{®} 1076 wurde das Produkt 1 h bei 18 mbar (Wasserstrahlvakuum) und anschließend bei 110°C und 1 mbar 3 h entwässert. Man erhielt ein klares Produkt.

Tab. 1 fasst die analytischen Daten der in den Beispielen hergestellten Polyole zusammen.

**Tab. 1**

| **Beispiel** | **Gemessener Basengehalt [ppm KOH]** | **Gemessene Säurezahl [ppm KOH]** | **Gemessene OH-Zahl [mg KOH / g]** | **Aussehen** |
|---|---|---|---|---|
| 1 (Vergleich) | 97,8 | 99 | 256 | trüb |
| 2 (Vergleich) | 187,2 | 153 | 258 | trüb |
| 3A (Vergleich) | 95,1 | 11,3 | 257 | leicht trüb |
| 3B | 1,0 | 22,7 | 257 | klar |
| 4A (Vergleich) | 81,2 | 46,1 | 254 | trüb |
| 4B | 14,1 | 42,2 | 255 | klar |
| 4C | 16,2 | 41,8 | 255 | klar |
| 5A (Vergleich) | 128,3 | 16,4 | 253 | trüb |
| 5B | 1,0 | 16,0 | 253 | klar |
| 5C | 0,0 | 24,9 | 253 | klar |
| 6 | 5,0 | 27,0 | 100,4 | klar |
| 6B | 2,0 | 17,0 | 253 | klar |
| 7A | 10,0 | 8,0 | 248 | klar |
| 7B | 3,5 | 16,0 | 249 | klar |
| 7C (Vergleich) | 61,0 | 10,0 | 248 | trüb |
| 8A | 2,0 | 5,0 | 248 | klar |
| 8B | 0,2 | 6,0 | 248 | klar |
| 9A (Vergleich) | 1,0 | 132,0 | 379 | trüb |
| 9B (Vergleich) | 8,0 | 135,0 | 379 | trüb |
| 10A | 20,0 | 127,0 | 209 | klar |
| 10B | 0,2 | 164,0 | 208 | klar |
| 11A | 0,1 | 12,0 | 251 | klar |
| 11B | 5,0 | 0,1 | 251 | klar |
| 11C | 5,0 | 1,0 | 251 | klar |

## Patentansprüche

1. Verwendung von Polyolen zur Herstellung von Polyurethanen, wobei die Polyole erhältlich sind durch basenkatalysierte Addition von Alkylenoxiden, wobei der Anteil an Ethylenoxid an den Alkylenoxiden mindestens 10 Gew.-% beträgt, an mehrfunktionelle Starterverbindungen mit Zerewitinoff-aktiven Wasserstoffatomen in Gegenwart von Katalysatoren auf Basis von Alkalimetallhydroxiden, Alkali-, Erdalkalimetallhydriden, Alkali-, Erdalkalimetallcarboxylaten oder Erdakalimetallhydroxiden in auf die Endproduktmenge bezogenen Konzentrationen von 0,004 bis 0,2 Gew.-%, und wobei die Neutralisation der alkalischen polymerisationsaktiven Zentren des rohen Alkylenoxidadditionsproduktes durch Zugabe einbasischer anorganischer Säuren erfolgt, **dadurch gekennzeichnet, dass** auf eine Abtrennung der gebildeten Salze verzichtet wird.

2. Verwendung von Polyolen zur Herstellung von Polyurethanen gemäß Anspruch 1, wobei die Polyole erhältlich sind durch basenkatalysierte Addition von Alkylenoxiden, wobei der Anteil an Ethylenoxid an den Alkylenoxiden mindestens 10 Gew.% beträgt, an mehrfunktionelle Starterverbindungen mit Zerewitinoff-aktiven Wasserstoffatomen in Gegenwart von Katalysatoren auf Basis von Alkalimetallhydroxiden, Alkali-, Erdalkalimetallhydriden, Alkali-, Erdalkalimetallcarboxylaten oder Erdakalimetallhydroxiden in auf die Endproduktmenge bezogenen Konzentrationen von 0,004 bis 0,2 Gew.-%, und wobei die Neutralisation der alkalischen polymerisationsaktiven Zentren des rohen Alkylenoxidadditionsproduktes durch Zugabe einbasischer anorganischer Säuren erfolgt, **dadurch gekennzeichnet, dass** auf eine Abtrennung der gebildeten Salze verzichtet wird und dass vor oder während der Addition der Alkylenoxide 10 bis 80 Gew.% , bezogen auf die Endproduktmenge, Triglyceride zugesetzt werden.

## Claims

1. Use of polyols for preparation of polyurethanes, the polyols being obtainable by base-catalysed addition of alkylene oxides, where the proportion of ethylene oxide in the alkylene oxides is at least 10% by weight, onto polyfunctional starter compounds having Zerevitinov-active hydrogen atoms in the presence of catalysts based on alkali metal hydroxides, alkali metal and alkaline earth metal hydrides, alkali metal and alkaline earth metal carboxylates or alkaline earth metal hydroxides in concentrations, based on the amount of end product, of 0.004 to 0.2% by weight, and the alkaline polymerization-active sites of the crude alkylene oxide addition product being neutralized by addition of monobasic inorganic acids, **characterized in that** there is no removal of the salts formed.

2. Use of polyols for preparation of polyurethanes according to Claim 1, the polyols being obtainable by base-catalysed addition of alkylene oxides, where the proportion of ethylene oxide in the alkylene oxides is at least 10% by weight, onto polyfunctional starter compounds having Zerevitinov-active hydrogen atoms in the presence of catalysts based on alkali metal hydroxides, alkali metal and alkaline earth metal hydrides, alkali metal and alkaline earth metal carboxylates or alkaline earth metal hydroxides in concentrations, based on the amount of end product, of 0.004 to 0.2% by weight, and the alkaline polymerization-active sites of the crude alkylene oxide addition product being neutralized by addition of monobasic inorganic acids, **characterized in that** there is no removal of the salts formed and **in that** 10 to 80% by weight, based on the amount of end product, of triglycerides are added before or during the addition of the alkylene oxides.

## Revendications

1. Utilisation de polyols pour la fabrication de polyuréthanes, les polyols pouvant être obtenus par addition catalysée par une base d'oxydes d'alkylène, la proportion d'oxyde d'éthylène parmi les oxydes d'alkylène étant d'au moins 10 % en poids, sur des composés de départ polyfonctionnels contenant des atomes d'hydrogène actifs selon Zerewitinoff en présence de catalyseurs à base d'hydroxydes de métaux alcalins, d'hydrures de métaux alcalins, alcalino-terreux, de carboxylates de métaux alcalins, alcalino-terreux ou d'hydroxydes de métaux alcalino-terreux en concentrations par rapport à la quantité de produit final de 0,004 à 0,2 % en poids, et la neutralisation des centres alcalins actifs pour la polymérisation du produit d'addition d'oxyde d'alkylène brut ayant lieu par ajout d'acides inorganiques monobasiques, **caractérisée en ce qu'**une séparation des sels formés est omise.

2. Utilisation de polyols pour la fabrication de polyuréthanes selon la revendication 1, les polyols pouvant être obtenus par addition catalysée par une base d'oxydes d'alkylène, la proportion d'oxyde d'éthylène parmi les oxydes d'alkylène étant d'au moins 10 % en poids, sur des composés de départ polyfonctionnels contenant des atomes d'hydrogène actifs selon Zerewitinoff en présence de catalyseurs à base d'hydroxydes de métaux alcalins, d'hydrures de métaux alcalins, alcalino-terreux, de carboxylates de métaux alcalins, alcalino-terreux ou d'hydroxydes de métaux alcalino-terreux en concentrations par rapport à la quantité de produit final de 0,004 à 0,2 % en poids, et la neutralisation des centres alcalins actifs pour la polymérisation du produit d'addition d'oxyde d'alkylène brut ayant lieu par ajout d'acides inorganiques monobasiques, **caractérisée en ce qu'**une séparation des sels formés est omise et **en ce que** 10 à 80 % en poids, par rapport à la quantité de produit final, de triglycérides sont ajoutés avant ou pendant l'addition des oxydes d'alkylène.
